# EUROPEAN PATENT SPECIFICATION

(11) **EP 3 793 883 B1**
(45) Date of publication and mention of the grant of the patent: **24.07.2024**
(21) Application number: 19804590.8
(22) Date of filing: 15.05.2019
(51) Int. Cl.: B62B 3/00, B62B 3/06, B65D 19/42

(54) **LOAD CARRIER WITH LIFT DEVICE**
LASTENTRÄGER MIT HEBEVORRICHTUNG
PORTE-CHARGE POURVU D'UN DISPOSITIF DE LEVAGE

(30) Priority: 15.05.2018 SE 1850568
(43) Date of publication of application: 24.03.2021
(73) Proprietor: Rindus Industri AB, 280 23 Hästveda (SE)
(72) Inventor: THORNSTRÖM, Ronny, 283 91 Osby (SE)
(74) Representative: Ström & Gulliksson AB
(86) International application number: PCT/SE2019/050441
(87) International publication number: WO 2019/221662

(56) References cited:
- EP-A1- 2 952 406
- EP-A1- 3 095 726
- WO-A1-2017/153397
- WO-A1-2018/019495
- CN-A- 107 757 684
- CN-U- 207 225 409
- DE-U1- 202014 000 755
- FR-A1- 3 039 104
- JP-A- 2003 327 125
- JP-A- 2007 302 476
- JP-A- 2017 081 301
- JP-A- 2018 024 415
- US-A1- 2011 243 696
- US-A1- 2015 344 086
- US-A1- 2016 288 687

## Description

### Technical Field

The present invention relates to a load carrier being used to facilitate transports. The invention also relates to a system with a load carrier and an associated trolley, and use of a load carrier for transporting articles.

### Background

For example, in hospital areas different types of trolleys are often used for various transports, such as medicines, fluids, equipment, etc. Examples of transporting solutions are described in EP3095726, US2011/243696, and JP2018024415.

While the hospitals are getting more modern some transports are automated, e.g. by letting some trolleys to be transported by means of AGV's (Automated Guided Vehicles). These can complement the transports and reduce the burden of the staff. AGV's, being remote controlled or programmed to be autonomous, often operate in such a manner that they drive under the trolleys, whereby a lifting mechanism of the AGV will lift the trolley such that its wheels will be raised, entirely or partly, from the ground. The AGV can thereafter, on its own, transport the trolley to its desired position by means of the integrated control system.

One problem arising when AGV's are used to transport trolleys is that the trolley needs to have a certain space from the ground in order to allow for the AGV to drive under the trolley. The increased height leads to reduced stability. This leads to a risk because the trolleys are not only to be maneuvered automatically, but they should also be transported manually when needed. If the space from the ground is handled by providing wheels having a larger diameter, unwanted effects are also obtained such as changed distance between axles, and reduced stability.

From above, it is desired to provide a load carrier which can solve at least some of the problems of prior art.

### Summary

An object of the present invention is therefore to alleviate the drawbacks of the prior art by providing a load carrier having the features defined by the first claim. Further objects and embodiments are defined by the appended dependent claims. An object of the invention is also to provide a system for transporting of articles, use of a load carrier for transporting of articles, as well as a method for transporting of articles.

According to a first aspect, a system comprising an AGV (automated guided vehicle), an article, and a load carrier for transporting of articles by the AGV is provided. The load carrier comprises a chassis on which four wheels are mounted, and a frame configured such that the article fits on the frame. The load carrier further comprises a lift device being arranged to raise and lower a frame, which is arranged at the chassis, between a position in which the frame is close to, or at, a ground position and a raised position. The load carrier is configured to allow the AGV to drive under the frame when the frame is in its raised position, and the AGV is configured to, when the frame is at the raised position, to lift the entire load carrier, including the article which is arranged on the frame, for further transport to a next destination. By providing a load carrier having a liftable frame AGV transporting of articles, such as a hospital department trolleys, is facilitated. This is because the load carrier has the required distance from the ground to let an AGV to drive under the load carrier having the frame in its raised position, while at the same time the frame can be easily lowered and consequently facilitate loading. Further, no modification of existing trolleys is needed in order to use these with AGV's, but as long as an article/trolley fits on the frame it can be transported by an AGV together with the load carrier.

In one embodiment said chassis comprises a first horizontal beam as well as a second and third horizontal beam which are essentially perpendicularly extending from the first beam. Together the beams form a U-formed chassis, and wherein the frame is arranged between the beams. The article being transported can thereby be loaded/unloaded from the frame through the open end of the chassis and a robust platform is formed as the wheels of the load carrier can be arranged at the corners to as much extent as possible.

In one embodiment the first horizontal beam forms a short side of the chassis, and wherein the second beam and the third beam form the respective long side. As articles, such as trolleys, often has a narrow rectangular shape of which the short sides face towards or away from the travel direction, it is advantageous if the load carrier exhibits a corresponding shape. From above, the opening of the U-shape is arranged on a short side, which makes use of the most common shape of the article in a preferred manner.

Further, the lift device may comprise a motor being configured to provide a vertical movement of the frame.

The load carrier may comprise removable walls arranged on at least the second beam and the third beam. The walls will protect the article being transported and prevent the article from falling off the load carrier, thereby causing damage on nearby people or materials.

The load carrier can comprise removable walls being arranged on all beams.

In one embodiment the load carrier comprises an article stop being arranged on the frame inside the first beam. The article stop makes sure that the article being transported will not fall off, or being positioned such that it comes into contact with the first beam when the frame is raised.

According to a second aspect a method for transporting of articles by means of a system according to the first aspect, is provided. The method comprises the steps of: lower the frame to a ground position, arrange the article on the frame, raise the frame to an elevated position, transport the load carrier, including the article, to a desired position by means of an AGV, lower the frame to a desired position for unloading, and unloading of the article.

### Brief Description of the Drawings

The present invention will be further described by the following examples, reference being made to the appended drawings, in which:
Fig. 1 is an isometric view of a chassis for a load carrier according to an embodiment;
Fig. 2 is an isometric view of a load carrier according to an embodiment;
Figs. 3 and 4 are isometric views of a load carrier where a trolley is being loaded/is loaded according to an embodiment, and
Fig. 5 is a schematic view of a method for transporting articles according to an embodiment.

### Detailed Description of Embodiment

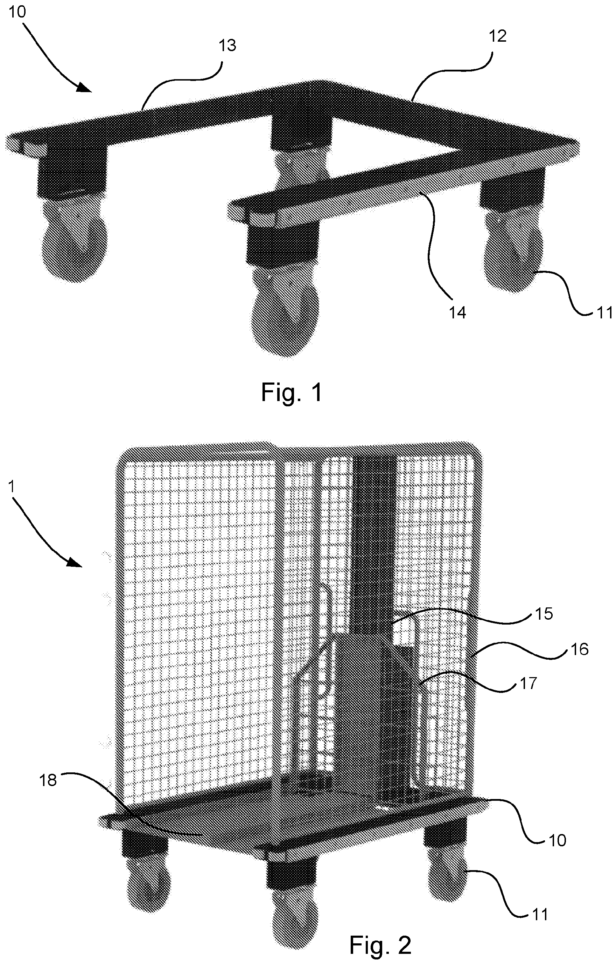

In Fig. 1 a chassis 10 for a load carrier 1 is shown. The chassis 10 is shown to have a U-shape and it comprises three horizontal beams 12, 13, 14. A first beam 12 forms a short side and from each end of the first beam, a second beam 13 and a third beam 14 extend to form the respective long sides of the chassis 10. The second beam 13 is parallel with the third beam 14, and the second and third beams 13, 14 are perpendicular to the first beam 12.

The opposite side to the first beam 12 is open such that articles can be inserted between the beams 13 ,14 which extend from the first beam 12. As is also shown in Fig. 1, the chassis is provided with four wheels 11 arranged in a substantially rectangular distribution. It is also possible that the front wheel pair has a larger or smaller distance between the wheels than the rear wheel pair. The wheels of the front wheel pair and/or the rear wheel pair can also be mounted on a pivoting axle allowing the wheels to move vertically. One example of such axle is described in SE 539 101 C2.

As is shown, the wheels 11 are mounted on spacers which allow for an increased distance to the ground, while at the same time the wheel diameter is reduced. It is of course also possible to make use of wheels having an increased diameter in order to achieve the same distance to the ground, but in such case optional caster wheels will require an increased area to move in a lateral direction.

In Fig. 2 a load carrier 1 is shown, comprising the chassis 10 of Fig. 1. The load carrier 1 comprises walls 16 which are mounted on three sides of the load carrier. The walls 16 are preferably removable and they can thereby be used only when needed, which means that no unnecessary weight needs to be transported. The walls 16 are mounted on the beams 12, 13, 14 of the chassis. It is also possible that walls 16 are only provided on two sides, preferably the long sides of the load carrier 1. The open side can suitably be provided with a gate that can be opened, such that the space inside the walls can be closed in an easy manner.

A frame 18 is also provided; this is arranged in a vertically moveable manner by means of a lift device 15. The lift device 15 connects the frame 18 to the chassis 10. The lift device 15 is preferably a motorized device which is controlled either by embedded control units or by an associated remote control. A linear motor can for example be used to provide vertical movement of the frame 18.

The frame 18 is arranged between the beams 12, 13, 14 of the chassis and thereby fills the void which is formed due to the U-shape of the chassis 10. The frame 18 can be lowered to a ground position, or at least close to a ground position, which facilitates loading of articles such as a trolley. When the article is positioned on the frame 18, it can be raised again to a level where the frame 18 is in level with the beams 12, 13, 14. In such way, for example a common department trolley of a hospital can easily be parked on the frame 18 of the load carrier 1, whereby it is lifted to a level by which an AGV can easily drive under the load carrier 1. The AGV can then lift the entire load carrier 1, including the article which is arranged on its frame 18, for further transport to the next destination. In this way there is no need for modifications of existing trolleys at the hospitals in order to use AGV transports, but the load carrier 1 is compatible with all trolleys/articles that fits with the frame 18.

Further, the load carrier 1 can be provided with an article stop 17. The article stop 17 is mounted on the short side of the load carrier 1 opposite the open/openable side and prevents articles, being loaded on the frame 18, to hit the first beam 12, the wall 16 that can be mounted thereto, or the lift device 15. The article stop 17 can be arranged as a part of the frame 18 and they can thereby be moveable up and down together. It is also possible that several article stops 17 can be mounted along the long sides of the load carrier 1, such that articles are prevented from e.g. be stuck against the walls 16 when it is raised/lowered in relation to these. Also, an article stop 17 can be arranged on the open short side, and which can be opened and closed to prevent articles from falling out when it is loaded on the frame 18.

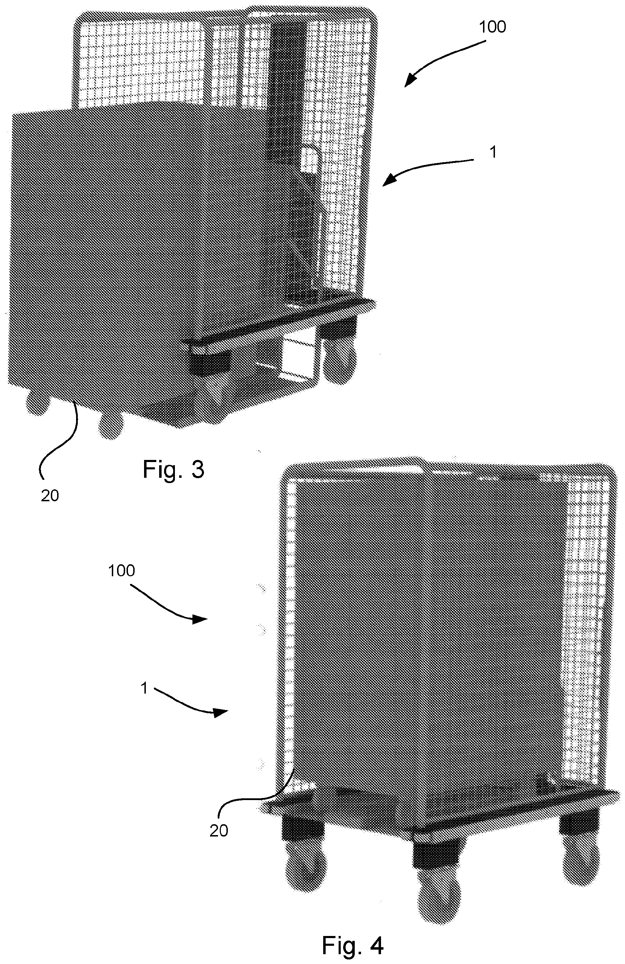

In Figs. 3 and 4 a system 100 for transporting of articles is shown. The system 100 comprises the load carrier 1 and an article 20, herein the form of a trolley 20. In Fig. 3 the frame 18 is illustrated in its lowered position and when the trolley 20 is about to be loaded on the frame 18. When the trolley 20 is positioned on the frame 18, which e.g. can be indicated by the fact that it reaches the article stop 17, the frame 18 can be raised. This is accomplished by means of the lift device 16 which preferably also comprises a control unit and a user interface in the form of a control panel by which a used can choose to raise or lower the frame 18.

An AGV can thereafter pick up the load carrier 1 together with the article/trolley 20 and transport these to the intended destination of the article 20. Thereafter the reverse procedure is performed, i.e. the frame 18 is lowered such that the article 20 can be unloaded.

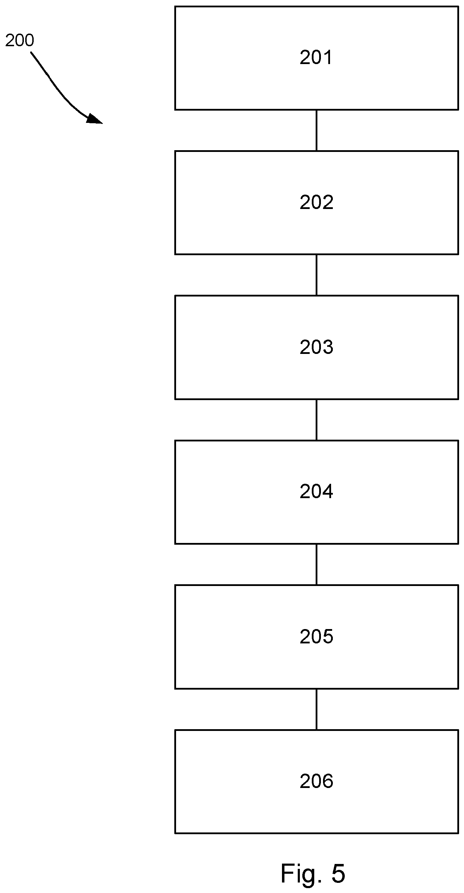

In Fig. 5 the above-described process is described in method steps. The method 200 comprises a first step 201 to lower the frame 18 to a ground position such that an article (e.g. a trolley) easily can be loaded. Thereafter a next step 202 is to position the article 20 on the frame 18. The frame 18 must thereafter be raised 203 to a raised position such that an AGV can drive under the load carrier 1. Thereafter the load carrier and the article 20 is transported 204 by the AGV to the desired position. There, the frame 18 is again lowered 205 to the desired unloading position. The desired position can be a ground position or any other suitable position. For example, the article 20 may perhaps be unloaded to surface being elevated relative the surface on which the wheels 11 of the load carrier 1 are standing; in that situation it is of course preferable to be able to select a slightly raised unloading position of the frame. After this, the article 20 can be unloaded 206.

It should be mentioned that the invention in no ways is limited to the embodiments described herein, and modifications are possibly without departing from the scope of the invention as defined by the appended claims.

## Claims

1. A system comprising an AGV (Automated Guided Vehicle), an article (20), and a load carrier (1) for transporting the article (20) by the AGV, wherein the load carrier (1) comprises a chassis (10) on which wheels (11) are mounted, a frame (18) configured such that the article fits on the frame (18), **characterized in that** the load carrier (1) further comprises a lift device (15) being arranged to raise and lower the frame (18), which is arranged at the chassis (10), between a position in which the frame (18) is close to, or at, a ground position and a raised position, wherein the load carrier (1) is configured to allow the AGV to drive under the frame (18) when the frame (18) is in its raised position, wherein the AGV is configured to, when the frame (18) is at the raised position, to lift the entire load carrier (1), including the article (20) which is arranged on the frame (18), for further transport to a next destination.

2. The system according to claim 1, wherein said chassis (10) comprises a first horizontal beam (12) as well as a second (13) and third (14) horizontal beam which are essentially perpendicularly extending from the first beam (12), which together from a U-formed chassis (10), and wherein the frame (18) is arranged between the beams (12, 13, 14).

3. The system according to claim 2, wherein the first horizontal beam (12) forms a short side of the chassis (10), and wherein the second beam (13) and the third beam (14) form the respective long side.

4. The system according to any of the preceding claims, wherein the lift device (15) comprises a motor configured to provide a vertical movement of the frame (18).

5. The system according to any of claims 2-4, wherein the load carrier (1) further comprises removable walls (16) arranged on at least the second beam (13) and the third beam (14).

6. The system according to claims 2 and 5, wherein removable walls (16) are arranged on all beams (12, 13, 14).

7. The system according to any of the preceding claims, wherein the load carrier (1) further comprises an article stop (17) arranged on the frame (18) inside the first beam (12).

8. A method for transporting articles by means of a system according to any of claims 1-7, the method comprising the steps of:
- (201) lower the frame (18) to a ground position,
- (202) arrange the article (20) on the frame (18),
- (203) raise the frame (18) to a raised position,
- (204) transport the load carrier (1) and the article (20) to the desired position by means of an AGV,
- (205) lower the frame (18) to the desired unloading position, and
- (206) unloading the article (20).

## Patentansprüche

1. System mit einem AGV (Automated Guided Vehicle), einem Gegenstand (20), und einen Lastträger (1) zum Transportieren des Gegenstands (20) durch das AGV, wobei der Lastträger (1) ein Fahrgestell (10) umfasst, auf dem Räder (11) montiert sind, einen Rahmen (18), der so gestaltet ist, dass der Gegenstand auf dem Rahmen (18) liegt, **dadurch gekennzeichnet, dass** der Lastträger (1) ferner eine Hebevorrichtung (15) zum Anheben und Absenken des Rahmens (18) umfasst, die am Fahrgestell (10) angeordnet ist, zwischen einer Position, in der sich der Rahmen (18) in der Nähe oder in einer Bodenposition befindet, und einer angehobenen Position, wobei der Lastträger (1) so ausgebildet ist, dass er dem AGV ermöglicht, unter den Rahmen (18) zu fahren, wenn sich der Rahmen (18) in seiner angehobenen Position befindet, wobei das AGV so konfiguriert ist, um dann, wenn sich der Rahmen (18) in der angehobenen Position befindet, den gesamten Lastträger (1) einschließlich des Gegenstands (20), der auf dem Rahmen (18) angeordnet ist, zum Weitertransport zu einem nächsten Bestimmungsort anzuheben.

2. System nach Anspruch 1, wobei das Fahrgestell (10) einen ersten horizontalen Träger (12) sowie einen zweiten (13) und dritten (14) horizontalen Träger umfasst, die die sich im Wesentlichen senkrecht von dem ersten Träger (12) erstrecken und zusammen ein U-förmiges Fahrgestell (10) bilden, und wobei der Rahmen (18) zwischen den Trägern (12, 13, 14) angeordnet ist.

3. System nach Anspruch 2, wobei der erste Horizontalträger (12) eine kurze Seite des Fahrgestells (10) bildet, und wobei der zweite Träger (13) und der dritte Träger (14) eine jeweilige Längsseite bilden.

4. System nach einem der vorhergehenden Ansprüche, wobei die Hebevorrichtung (15) einen Motor umfasst, der für eine vertikale Bewegung des Rahmens (18) ausgelegt ist.

5. System nach einem der Ansprüche 2 bis 4, wobei der Lastträger (1) ferner abnehmbare Wände (16) aufweist, die zumindest an dem zweiten Träger (13) und dem dritten Träger (14) angeordnet sind.

6. System nach den Ansprüchen 2 und 5, wobei die abnehmbaren Wände (16) an allen Trägern (12, 13, 14) angeordnet sind.

7. System nach einem der vorhergehenden Ansprüche, wobei der Lastträger ferner einen Gegenstandsanschlag (17) aufweist, der an dem Rahmen (18) innerhalb des ersten Trägers (12) angeordnet ist.

8. Verfahren zum Transportieren von Gegenständen mittels eines Systems nach einem der Ansprüche 1-7, wobei das Verfahren die folgenden Schritte umfasst:
- (201) Absenken des Rahmens (18) auf eine Bodenposition,
- (202) Anordnen des Gegenstands (20) auf dem Rahmen (18),
- (203) Anheben des Rahmens (18) in eine angehobene Position,
- (204) Transportieren des Lastträgers (1) und des Gegenstands (20) an die gewünschte Position mit Hilfe eines AGV,
- (205) Absenken des Rahmens (18) in die gewünschte Entladeposition, und
- (206) Entladen des Gegenstands (20).

## Revendications

1. Système comprenant un AGV (véhicule guidé automatisé), un article (20), et un porte-charge (1) pour le transport de l'article (20) par l'AGV, dans lequel le porte-charge (1) comprend un châssis (10) sur lequel des roues (11) sont montées, un cadre (18) configuré de sorte que l'article s'ajuste sur le cadre (18), **caractérisé en ce que** le porte-charge (1) comprend en outre un dispositif de levage (15) étant agencé pour relever et abaisser le cadre (18), qui est agencé au niveau du châssis (10), entre une position dans laquelle le cadre (18) est presque ou à une position au sol et une position relevée, dans lequel le porte-charge (1) est configuré pour permettre à l'AGV de circuler sous le cadre (18) lorsque le cadre (18) est dans sa position relevée, dans lequel l'AGV est configuré pour, lorsque le cadre (18) est à la position relevée, pour lever la totalité du porte-charge (1), y compris l'article (20) qui est agencé sur le cadre (18), pour un transport ultérieur vers une destination suivante.

2. Système selon la revendication 1, dans lequel ledit châssis (10) comprend une première poutre horizontale (12) ainsi qu'une deuxième (13) et une troisième (14) poutre horizontale qui s'étendent essentiellement perpendiculairement à partir de la première poutre (12), qui forment ensemble un châssis en forme de U (10), et dans lequel le cadre (18) est agencé entre les poutres (12, 13, 14).

3. Système selon la revendication 2, dans lequel la première poutre horizontale (12) forme un côté court du châssis (10), et dans lequel la deuxième poutre (13) et la troisième poutre (14) forment le côté long respectif.

4. Système selon l'une quelconque des revendications précédentes, dans lequel le dispositif de levage (15) comprend un moteur configuré pour fournir un mouvement vertical du cadre (18).

5. Système selon l'une quelconque des revendications 2 à 4, dans lequel le porte-charge (1) comprend en outre des parois amovibles (16) agencées sur au moins la deuxième poutre (13) et la troisième poutre (14).

6. Système selon les revendications 2 et 5, dans lequel des parois amovibles (16) sont agencées sur toutes les poutres (12, 13, 14).

7. Système selon l'une quelconque des revendications précédentes, dans lequel le porte-charge (1) comprend en outre une butée d'article (17) agencée sur le cadre (18) à l'intérieur de la première poutre (12).

8. Procédé pour le transport d'articles au moyen d'un système selon l'une quelconque des revendications 1 à 7, le procédé comprenant les étapes consistant à :
- (201) abaisser le cadre (18) jusqu'à une position au sol,
- (202) agencer l'article (20) sur le cadre (18),
- (203) relever le cadre (18) jusqu'à une position relevée,
- (204) transporter le porte-charge (1) et l'article (20) jusqu'à la position souhaitée au moyen d'un AGV,
- (205) abaisser le cadre (18) jusqu'à la position de déchargement souhaitée, et
- (206) décharger l'article (20).
